Europäisches Patentamt

European Patent Office

Office européen des brevets

(11) Publication number: **0 422 559 A1**

# EUROPEAN PATENT APPLICATION

(21) Application number: **90119258.3**

(22) Date of filing: **08.10.90**

(51) Int. Cl.5: **C01B 23/00, C01B 3/00**

(30) Priority: **09.10.89 JP 263215/89**

(43) Date of publication of application:
**17.04.91 Bulletin 91/16**

(84) Designated Contracting States:
**DE FR GB**

(71) Applicant: **MATSUSHITA ELECTRIC INDUSTRIAL CO., LTD**
**1006, Ohaza Kadoma, Kadoma-shi**
**Osaka 571(JP)**

(72) Inventor: **Moriwaki, Yoshio**
**13-14, Minamifunahashi-2-chome**
**Hirakata-shi(JP)**
Inventor: **Gamo, Takaharu**
**12-3, Kasugaoka-3-chome**
**Fujiidera-shi(JP)**
Inventor: **Shintani, Akemi**
**13-6, Minamiichioka-2-chome**
**Minato-ku, Osaka-shi(JP)**
Inventor: **Iwaki, Tsutomu**
**26-193, Hashimoto Kurigadani**
**Yawata-shi(JP)**

(74) Representative: **Patentanwälte Leinweber & Zimmermann**
**Rosental 7/II Aufg.**
**W-8000 München 2(DE)**

(54) **Rare gas purifying method.**

(57) A hydrogenstorage alloy powder is used for purifying rare gas. The hydrogenstorage alloy powder is formed, together with another metal or ceramics powder, porous, fibrous or other form, into a formed product under pressure and/or heat. The blank hydrogenstorage alloy powder, or the hydrogenstorage alloy powder, in the formed product, is subjected to at least one hydrogeneration and at least one dehydrogeneration. The formed products are received within a sealed container having a gas inlet and a gas outlet, and feedstock rare gas is brought into contact with the molded products in the container, thereby removing impurity gas from the feedstock rare gas.

EP 0 422 559 A1

# RARE GAS PURIFYING METHOD

## BACKGROUND OF THE INVENTION

This invention relates to a method of removing impurity gases from rare gas to improve the purity of the rare gas. There are known helium (He), neon (Ne), argon (Ar), krypton (Kr), xenon (Xe) and radon (Rn) as rare gas. The present invention is directed to a method of purifying one of such rare gases or a mixture of such rare gases. More specifically, the present invention provides a method by which a high-purity rare gas of good quality can be obtained easily.

As conventional rare gas purifying methods, there are known an absorption method, an adsorption method, a diffusion method, a cooling separation method, and a chemical reaction method, and a suitable one of these methods has been selected depending on purposes and conditions of purification. The most widely-used method among these methods is the adsorption method in which a palladium catalyst, a nickel catalyst or a zeolite catalyst is mainly used. These catalysts are relatively expensive whereas inexpensive catalysts have problems with respect to adsorbability and regeneration of the catalyst. Therefore, it has been desired to provide a rare gas purifying method which can be carried out easily and more inexpensively.

To solve the above-mentioned problems, the inventors of the present invention have already proposed a use of a powder material (disclosed in JP-B2-62-30127) of a hydrogenstorage alloy which is subjected to at least one process of hydrogeneration and subsequent dehydrogeneration. Here, the term "hydrogeneration process" means that hydrogen is stored or occluded into the hydrogenstorage alloy at around room temperature and at a high hydrogen pressure (for example, about 10 to about 20 $kg/cm^2$) , and the term "dehydrogeneration process" means that the alloy in which the hydrogen is occluded is either heated or placed in an atmosphere of a low hydrogen pressure.

Although the rare gas purifying method using the hydrogenstorage alloy mentioned above has exhibited excellent effects, it has been found that there still exists the following problem.

Namely, the problem with the method is that although the rare gas purifying ability of the alloy is excellent for an initial phase of use of the alloy, the removal of impurity gases in a feedstock gas by adsorption is effected unevenly in the alloy during a long period of use, thus failing to use the alloy stably over a long period of time. More specifically, when nitrogen gas, which is present in a rare gas in a large amount as impurity gas, unevenly reacts with the alloy, only such reacted portions of the alloy are consolidated, which results in a problem that a subsequent flow of the feedstock gas is prevented, and in some cases a pressure loss increases extremely.

## DISCLOSURE OF THE INVENTION

It is therefore an object of this invention to provide a rare gas purifying method which can maintain a high rare gas purifying ability over a prolonged period of time.

According to one aspect of the present invention, there is provided a rare gas purifying method comprising the steps of:

(a) subjecting a hydrogenstorage alloy powder to a least one process of hydrogeneration and subsequent dehydrogeneration;

(b) integrally forming the alloy powder with another metal or ceramics powder in such a manner that the alloy powder is distributed generally uniformly in another metal or ceramics powder, thereby providing formed porous products of a predetermined shape; and

(c) putting the formed products in a sealed container having a gas inlet and a gas outlet, and continuously introducing feedstock rare gas into the container via the gas inlet and dischargeing processed rare gas from the gas outlet, so that the feedstock rare gas is brought into contact with the formed products within the container, thereby removing impurity gas from the feedstock rare gas.

According to another aspect of the invention, there is provided a rare gas purifying method comprising the steps of:

(a) integrally forming a powder hydrogen storage alloy with another metal or ceramics powder in such a manner that the alloy powder is distributed generally uniformly in another metal or ceramics powder, thereby providing a form product having many pores of a predetermined shape;

(b) subjecting the alloy powder in the formed product to at least one process of hydrogeneration and subsequent dehydrogeneration; and

2

(c) putting the formed products in a sealed container having a gas inlet and a gas outlet, and continuously introducing a feedstock rare gas into the container via the gas inlet and discharging processed rare gas from the gas outlet, so that the feedstock rare gas is brought into contact with the formed products within the container, thereby removing impurity gases from the feedstock rare gas.

Most preferably, $MgZn_2$-type Ti-Mn based alloy comprising as main components titanium and manganese is used as the hydrogenstorage alloy. Ti-Fe or La-$Ni_5$ based alloys can also be used as the hydrogenstorage alloy.

Broadly, there are two methods of producing the formed product. One method is to mix the powder hydrogenstorage alloy or the powder hydrogenstorage alloy subjected to at least one process of hydrogeneration and subsequent dehydrogeneration with powder of not more than 100 mesh composed of at least one another metal selected from the group consisting of Cu, Al, Zn, Ni, Fe, Co and Mn, and then to form this powder mixture into formed products. Although it is effective to merely mix two kinds of powder (that is, the alloy powder and another metal powder), it is preferred that surfaces of particles of the hydrogenstorage alloy powder be plated with copper or nickel. This plating is carried out, for example, by an electroless process. The powder is introduced into a plating bath, and then the bath is agitated, so that a film of 5 to 10 wt.% is formed on the surface of each particle of the powder. On a microscopic basis, the surface of each particle of the powder is partially exposed, since the plated film is not sufficiently dense.

The other forming method is to fill the powder hydrogenstorage alloy or the powder hydrogenstorage alloy subjected to at least one process of hydrogeneration and subsequent dehydrogeneration into a porous member of another metal or ceramics, and then to form them into an integral piece. Preferably, the porous member is of a foamed one or a fibrous one. It is advantageous that fine powder of metal or ceramics is dispersed in the formed product, and it is also advantageous that hydrogen storage alloy powder having a porous film of another metal or ceramics formed on the surface of each particle of the powder is filled in the porous member. It is particularly preferred that the hydrogenstorage alloy to be used should be $MgZn_2$-type Ti-Mn based alloy comprising as main components titanium and manganese.

In each of the above two methods of producing the formed product, the step of subjecting the hydrogenstorage alloy powder to the process of hydrogeneration and subsequent dehydrogeneration may be either before or after the step of producing the formed product.

Preferably, the amount of the hydrogenstorage alloy in the formed product should be 5 to 90 wt.% in view of gas purification ability and gas purification lifetime of the product.

For forming the molded product from the hydrogenstorage alloy power and another metal or ceramics, the two materials are mixed together and then are integrally formed together under pressuring and/or heating (utilizing a diffusion phenomenon by heating). A recommended forming method is one utilizing pressure, by which the forming can be carried out easily, and the formed product of a stable quality can be obtained.

Examples of the porous member to be used in the above second molding method include a foamed ceramics and a member composed of fibers. When the hydrogenstorage alloy powder is to be filled in interior (i.e., pores) of the porous member, fine powder of another metal or ceramics can be filled, together with the alloy powder, in the porous member so as to adjust the porosity of the formed product, so that the mechanical strength of the formed product can be increased. Instead of using such fine powder of another metal or ceramics, a porous film of another metal or ceramics may be formed on the surface of each particle of the hydrogenstorage alloy powder. The porous film is formed by an electroless plating, a chemical vapor deposition, or the like.

Temperature of the container for receiving the formed products is in the range of between 50°C and 300°C which is more effective in purification of a rare gas than room temperature.

In the above method of the present invention, the hydrogenstorage alloy powder or the hydrogenstorage alloy powder which has been subjected to at least one process of hydrogeneration and subsequent dehydrogeneration is integrally formed, with another metal or ceramics, into a pellet or sheet. The formed products thus formed are put into a rare gas purifying container. In a conventional method, hydrogenstorage alloy powder is merely filled within a container, and therefore the adsorption of impurity gases by the alloy powder is carried out unevenly, which results in problems that the alloy powder (adsorbent) is consolidated and that flow of the feedstock rare gas is blocked. On the other hand, in the present invention, there are used the formed products, and the formed products maintain flow of the feedstock rare gas, and therefore the contact of the feedstock rare gas with the hydrogenstorage alloy capable of removing the impurity gases from the rare gas by adsorption is quite uniform over the entire area, so that a stable purification ability can be maintained over a prolonged period of use.

If the formed product is made solely of the hydrogenstorage alloy, consolidation of the powder particle, fine powdering of the formed·alloy due to hydrogeneration and subsequent dehdyrogeneration, and fine powdering of the same due to the formed products being in contact with one another or to the adsorption reaction can easily develop. However, such problems of the consolidation and the fine-powdering can be overcome by mixing powder of another metal or ceramics with the hydrogenstorage alloy powder or the hydrogenstorage alloy powder subjected to at least one process of hydrogeneration and subsequent dehydrogeneration, or by covering the surface of each particle of the alloy powder with the porous material of another metal or ceramics, or by filling the hydrogenstorage alloy in the porous member.

BRIEF DESCRIPTION OF THE DRAWINGS

Fig. 1 is a vertical cross-sectional view of a rare gas purifying container of a cylindrical shape provided with an electric heater, molded products (i.e., pellets) each made of a mixture of hydrogenstorage alloy powder and copper powder being filled in the container; and

Fig. 2 is a vertical cross-sectional view of another rare gas purifying container of a cylindrical shape provided with an electric heater, foamed nickel substrates having hydrogenstorage alloy filled therein and foamed nickel sheets being received within the container in an alternately laminated or stacked condition.

DESCRIPTION OF THE PREFERRED EMBODIMENT

Example 1

One example of a purifying method of the invention will now be described, in which $TiMn_{1.5}$alloy is used as a hydrogenstorage alloy, and argon gas is used as rare gas.

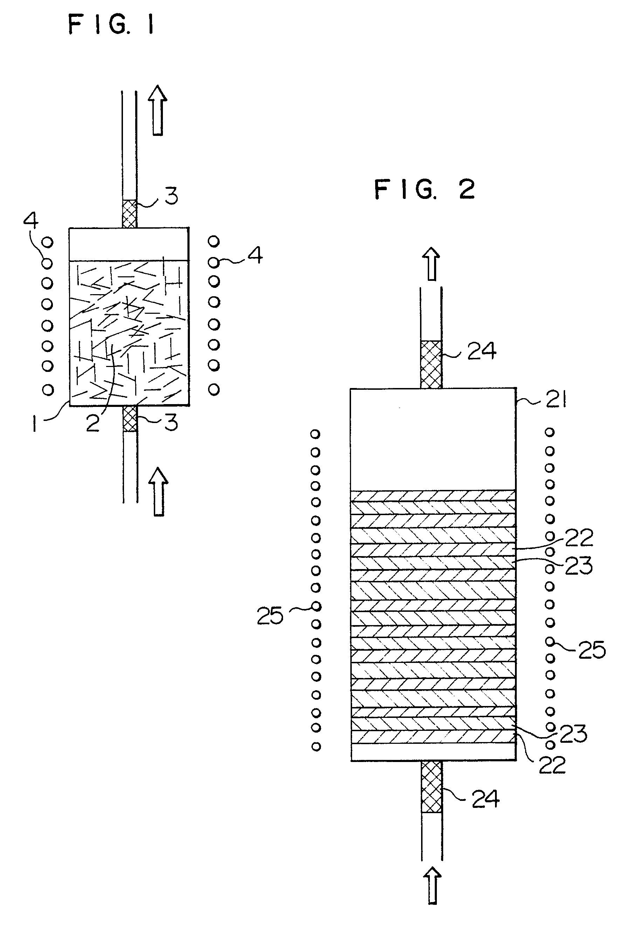

$TiMn_{1.5}$alloy of a $MgZn_2$-type structure which is one of hydrogenstorage alloys was melted by an arc melting process to produce an ingot. The ingot was heat-treated at 1,100°C for 10 hours for homogenizing purposes. Then, the ingot was mechanically pulverized into particles of 100 to 200 mesh. Then, a weighed amount of fine powder of copper being on the market and having not more than 200 mesh which was equal in weight to the pulverized or powder alloy was mixed with the powdered alloy. The powder mixture thus obtained was molded by pressing into a pellet having a diameter of 10 mm and a length of 8 mm. The formed pellets each made of the hydrogenstorage alloy powder and the copper powder were filled in an appropriate amount in a container of stainless steel. Fig. 1 shows a vertical cross-section of this container.

As clearly shown in Fig. 1, a number of formed products 2 (pellets) of the powder mixture of the hydrogenstorage alloy and the copper were filled in the cylindrical container 1 of stainless steel. A powder scattering-prevention filter of sintered metal having fine pores was provided in each of a gas inlet 3 and a gas outlet 3 of the container 1, these gas inlet and outlet serving as gas flow passages. An electric heater 4 was installed around the container 1 so as to heat the interior of the container 1.

First, the interior of the container 1 was subjected to a vacuum degassing while heating the interior of the container 1 to 200°C. Then, hydrogen gas of 30 atmospheric pressure was introduced at room temperature into the container 1 to carry out an initial hydrogeneration of the $TiMn_{1.5}$alloy over a sufficient period of time. The amount of the hydrogen finally occluded or stored in the $TiMn_{1.5}$alloy at that time was 218 cc per gram of the alloy. Then, the interior of the container 1 was evacuated at room temperature to dehydrogenerate the $TiMn_{1.5}$alloy to remove the hydrogen therefrom. The above hydrogeneration and dehydrogeneration were repeated five times, and then the interior of the container 1 was again heated to 200°C, and a similar dehydrogeneration was carried out by a vacuum pump.

Thus, the formed products 2 in the container 1 were ready for use as an adsorbent, and then argon gas was used as rare gas, and the purification of argon gas was carried out so as to provide argon gas of a high purity, while maintaining the interior of the container 1 at 200°C.

More specifically, the feedstock argon gas containing a relatively large amount of impurities was continuously fed into the container 1 via the lower gas inlet 3, and the purified argon gas from the upper gas outlet 3 was collected, and the purity of the purified argon gas was compared with that of the feedstock argon gas. Also, a gas pressure behavior during the continuous purification of the argon gas was observed.

For the purpose of comparing the method of the present invention with a conventional method, the same test was conducted with respect to the conventional method in which the same hydrogenstorage alloy of the same amount, the same instruments and the same environmental condition were used as in the method of the invention. The only difference of this conventional method was that the hydrogenstorage alloy was merely pulverized mechanically, and was filled in the form of powder in the container, without being formed into pellets.

The results of the purity analysis with respect to the method of the present invention will now first be described. The amounts of the impurities in the feedstock argon gas were compared with the amounts of the impurities in the purified argon gas continuously obtained from the feedstock argon gas, using a trace oxygen analyzer, a gas chromatography analyzer and a dew-point instrument which were of the ordinary type. One example of the results is shown in a Table below.

As is clear from the Table, although the amounts of the impurities in the feedstock argon gas were considerably large, the amount of any of the impurities in the purified argon gas was less than a detection limit of the analyzer. Thus, it was confirmed that the method of the invention had a very high purification ability. This excellent purification ability remains unchanged during 60 days of the continuous test. With respect to the gas pressure behavior, there was almost no difference between the pressure of the feedstock gas at the gas inlet and the pressure of the purified gas at the gas outlet. Thus, any large pressure loss was not recognized.

Table

| Analysis Gas | Feedstock Argon Gas (ppm) | Purified Argon Gas (ppm) |
|---|---|---|
| $O_2$ | 35 | < 0.1 |
| $N_2$ | 2700 | < 1 |
| CO | 2 | < 0.1 |
| $CO_2$ | 3 | < 0.1 |
| $CH_4$ | 7 | < 0.1 |
| $H_2O$ | 25 | < 1 |

In the conventional method in which the hydrogenstorage alloy was not formed into molded products, during an initial period of the test, the amounts of the impurity gases in the purified argon gas were at levels similar to those shown in the above Table, thus exhibiting a high purification ability. However, after about 20 days from the start of the test, it was recognized that the pressure of the feedstock gas at the gas inlet gradually increased, and on the 25th day from the start of the test, the pressure loss was so excessive that the purifying container could not be used any longer. Upon examining this cause, it was thought that this was mainly because a large amount of nitrogen gas present as an impurity in the feedstock gas reacted with the alloy to form nitrides which blocked off the flow of the gas.

Example 2

In Example 1 above, the pellets composed of the hydrogenstorage alloy power and the copper powder are used; however, in this example, there are used sheet-like products formed by filling an hydrogenstorage alloy in a porous member of another metal.

In this Example, $TiMn_{1.5}$alloy was used as the hydrogenstorage alloy, and argon gas was used as rare gas, as in Example 1.

Hydrogenstorage alloy powder, obtained according to the same procedure of Example 1, was filled in a foamed nickel substrate having a porosity of 95%, the average pore size 150 $\mu$m and a thickness of 1.2 mm. More specifically, ethyl alcohol was added to the hydrogenstorage alloy powder to form a paste, and the paste was forced into the foamed nickel substrate constituting the porous member in a three-dimensional manner, thus filling the paste in the substrate. Then, the nickel substrate with the paste was dried, and pressed by a pressing machine into an average thickness of 0.6 mm to form a one-piece formed product. This sheet-like formed product composed of the hydrogenstorage alloy and the foamed nickel substrate was cut into a size of 5 cm x 10 cm, and ten pieces of sheet-like formed products of this size were put into a container of stainless steel. Fig. 2 shows a vertical cross-section of this container. As shown in Fig. 2, ten pieces of formed products 22 (composed of the hydrogenstorage alloy and the foamed nickel substrate) and foamed nickel sheets 23 were laminated or stacked alternately within the stainless steel container 21, the foamed nickel sheets 23 serving to disperse the gas.

A powder scattering-prevention filter 24 of sintered metal having fine pores was provided in each of a gas inlet and a gas outlet of the container 21, these gas inlet and outlet serving as gas flow passages. An electric heater 25 was installed around the container 21 so as to heat the interior of the container 21.

As in Example 1 above, the interior of the container 21 was subjected to a vacuum degassing while heating the interior of the container 1 to 200°C. Then, hydrogen gas of 30 atmospheric pressure was introduced at room temperature into the container 21 to carry out an initial hydrogeneration of the $TiMn_{1.5}$ alloy over a sufficient period of time. The amount of the hydrogen finally occluded or stored in the $TiMn_{1.5}$ alloy at that time was 215 cc per gram of the alloy. Then, the interior of the container 21 was evacuated at room temperature to dehydrogenerate the $TiMn_{1.5}$ alloy to remove the hydrogen therefrom. The above hydrogeneration and dehydrogeneration were repeated four times, and then the interior of the container 21 was again heated to 200°C, and a similar dehydrogeneration was carried out by a vacuum pump. Thus, the formed products 22 in the container 21 were ready for use as an adsorbent, and then argon gas was used as rare gas, and the purification of the argon gas was carried out so as to provide the argon gas of a high purity, while maintaining the interior of the container 21 at 200°C.

More specifically, the feedstock argon gas containing a relatively large amount of impurities was continuously fed into the container 21 via the lower gas inlet, and the purified argon gas from the upper gas outlet was collected, and the purity of the purified argon gas was compared with that of the feedstock argon gas. Also, a gas pressure behavior during the continuous purification of the argon gas was observed.

The results of this analysis were similar to the results of the analysis of Example 1 shown in the above Table, and thus it was confirmed that this method had a very high purification ability. This excellent purification ability remains unchanged during 60 days of the continuous test. With respect to the gas pressure behavior, there was almost no difference between the pressure of the feedstock gas at the gas inlet and the pressure of the purified gas at the gas outlet. Thus, an abnormal pressure loss was not recognized.

Supplementary explanation of the present invention will now be given with reference to the above test examples.

(a) In the above Examples, the hydrogenstorage alloy was provided in the form of molded products, and then the hydrogen occlusion and the hydrogen emission were carried out. However, substantially similar effects can be obtained by first subjecting the hydrogenstorage alloy to at least one hydrogen occlusion and at least one hydrogen emission and then by mixing this alloy powder with another metal powder and subsequently forming this mixture into formed products.

(b) In the above Examples, although the interior of the container containing the molded products is 200°C, a high purification effect is obtained by heating the interior of the container to the range of between 50°C and 300°C and contacting the feedstock gas with the hydrogenstorage alloy, as compared with the case where such contact is carried out at room temperature.

(c) In the above Examples, $TiMn_{1.5}$ alloy is selected as the hydrogenstorage alloy. Although substantially similar effects can be obtained when using ordinary TiFe-type and $LaNi_5$-type alloys as the hydrogenstorage alloy, $MgZn_2$-type Ti-Mn alloy comprising as main components Ti and Mn is the best among such hydrogenstorage alloys.

(d) In Example 1 above, although copper is selected as the metal to be mixed with the hydrogenstorage alloy, powder of not more than 100 mesh composed of at least one metal selected from the group consisting of Al, Zn, Ni, Fe, Co and Mn can be suitably used. Particularly when the metal is at least one of Cu and Ni and is plated on the surfaces of the particles of the hydrogenstorage alloy powder, the resultant molded product is particularly excellent in stability and gas permeability.

(e) In the above Examples, the amount of the hydrogenstorage alloy in the molded product is 50% by weight, and it is preferred that this amount be in the range of about 5 wt.% to 90 wt.% in view of the gas purification lifetime and the gas purification ability.

(f) In the above Examples, the mixture of the hydrogenstorage alloy powder and the other metal power is formed into the molded product by a press forming method. This method is excellent in that the quality of the formed product is stable and that the moldability is excellent.

(g) In the above Examples, although there is used only one container containing the formed products of the hydrogenstorage alloy, there can also be advantageously used a multi-stage arrangement in which two or more such containers are arranged in series with respect to the flow of the rare gas.

(h) In the above Examples, although argon gas is used as rare gas, similar effects can, of course, be achieved with respect to other rare gas than argon gas.

(i) In the above Examples, although only the hydrogenstorage alloy is used as the adsorbent, other ordinary adsorbent, such as a bulk getter and molecular sieves, can be advantageously used in combination with the hydrogenstorage alloy. More specifically, there can be used a method in which after contacting the rare gas with such ordinary adsorbent, the rare gas is contacted with the hydrogenstorage alloy, or there can be used a method in which the ordinary adsorbent, as well as the hydrogenstorage alloy, is a constituent of the formed product.

As is apparent from the above, with the rare gas purifying method of the present invention, excellent and stable purification effects can be maintained over a prolonged period of use, by using the pellet-like or sheet-like formed products in combination with another metal or ceramics.

## Claims

1. A rare gas purifying method comprising the steps of:
   (a) subjecting a hydrogenstorage alloy powder to at least one process of hydrogeneration and subsequent dehydrogeneration;
   (b) integrally forming the alloy powder with another metal or ceramics in such a manner that the powder is distributed generally uniformly in another metal or ceramics, thereby providing formed porous products of a predetermined shape; and
   (c) putting said formed products in a sealed container having a gas inlet and a gas outlet, and continuously introducing feedstock rare gas into the container via the gas inlet and discharging the processed rare gas from the gas outlet, so that the rare gas is brought into contact with the formed products within said container, thereby removing impurity gases from the rare gas.

2. A rare gas purifying method comprising the steps of:
   (a) integrally forming a hydrogenstorage alloy powder with another metal or ceramics powder in such a manner that the alloy powder is distributed generally uniformly in another metal or ceramics powder, thereby providing a formed product of a predetermined shape;
   (b) subjecting the alloy powder in the formed product to at least one process of hydrogeneration; and
   (c) putting the formed products in a sealed container having a gas inlet and a gas outlet, and continuously introducing a feedstock rare gas into the container via the gas inlet and discharging processed rare gas from the gas outlet, so that the feedstock rare gas is brought into contact with the formed products within the container, thereby removing impurity gases from the feedstock rare gas.

3. A method according to claim 1 or claim 2, wherein the interior of the container containing the formed products is heated to and maintained at 50° C to 300° C before the feedstock rare gas is introduced into the container.

4. A method according to claim 1 or claim 2, wherein the other metal is in the form of powder of not more than 100 mesh, and is composed of at least one selected from the group consisting of copper, aluminum, zinc, nickel, iron, cobalt and manganese.

5. A method according to claim 1 or claim 2, wherein the product is formed by filling the powder hydrogenstorage alloy in a porous member of metal or ceramics and then by forming the porous member and the alloy into a one-piece formed construction.

6. A method according to any one of claims 1 to 5, wherein the hydrogenstorage alloy is $MgZn_2$-type Ti-Mn based alloy comprising as main components titanium and manganese.

7. A method according to claim 4, wherein the other metal is at least one of copper and nickel, and is plated on surfaces of the particles of the powder hydrogenstorage alloy.

8. A method according to claim 5, wherein another fine powder of metal or ceramics is filled, together with the powder hydrogenstorage alloy, in the porous member.

9. A method according to claim 5, wherein a porous film of metal or ceramics is formed on the surfaces of the particles of the hydrogenstorage alloy powder.

# F I G. 1

# F I G. 2

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | PATENT ABSTRACTS OF JAPAN vol. 12, no. 297 (C-519)(3144) 12 August 1988, & JP-A-63 64901 (MATSUSHITA ELECTRIC) 23 March 1988, * the whole document * | 1,6,7,9, 4-9 | C 01 B 23/00 C 01 B 3/00 |
| Y | EP-A-0 069 555 (MPD TECH CORP) * page 3, lines 11 - 25; claims 1-4 * | 4-6 | |
| Y | EP-A-0 069 941 (AIR PRODUCTS AND CHEMICALS INC) * page 7, line 28 - page 8, line 24; claims 1, 3 * | 4-6 | |
| Y | CHEMICAL ABSTRACTS, vol. 106, no. 8, February 1987 Columbus, Ohio, USA S. Takashi et al.: "Manufacture of hydrogen-storage material." page 188; ref. no. 53302 P * abstract & JP-A-61209901 (Nippon Coin) * | 4,6 | |
| Y | CHEMICAL ABSTRACTS, vol. 106, no. 26, June 1987 Columbus, Ohio, USA H. Fujita et al.: "Hydrogen adsorbents" page 147; ref. no. 216406 S * abstract & JP-A-61281002 (Mitsubishi Heavy Ind.) * | 5,8 | |
| Y | EP-A-0 080 066 (THYSSEN INDUSTRIE AG) * the whole document * | 7,9 | TECHNICAL FIELDS SEARCHED (Int. Cl.5) C 01 B |
| A | FR-A-2 581 893 (SHANGHAI INST OF METALLURGY) * the whole document * | 1,2 | |
| A | CHEMICAL ABSTRACTS, vol. 107, no. 26, December 1987 Columbus, Ohio, USA T. Nomura et al.: "Adsorption method for purification of helium or argon or methane." page 147; ref. no. 239313 U * abstract * | | |

The present search report has been drawn up for all claims

| Place of search | Date of completion of search | Examiner |
|---|---|---|
| The Hague | 16 January 91 | ZALM W.E. |